# EUROPEAN PATENT APPLICATION

(11) **EP 4 027 102 A1**
(43) Date of publication of application: **13.07.2022**
(21) Application number: 20861563.3
(22) Date of filing: 31.07.2020
(51) Int. Cl.: G01B 11/00, G06T 7/70

(54) **RELATIVE POSITION MEASURING DEVICE, RELATIVE POSITION MEASURING METHOD, AND RELATIVE POSITION MEASURING PROGRAM**

(30) Priority: 02.09.2019 JP 2019159210
(71) Applicant: FURUNO ELECTRIC CO., LTD., Nishinomiya-City Hyogo 662-8580 (JP)
(72) Inventor: TODA, Hiroyuki, Nishinomiya-City, Hyogo 6628580 (JP); NAKAMURA, Hiraku, Nishinomiya-City, Hyogo 6628580 (JP); SONOBE, Tatsuya, Nishinomiya-City, Hyogo 6628580 (JP); TSUJIMOTO, Kazuki, Nishinomiya-City, Hyogo 6628580 (JP)
(74) Representative: Müller Hoffmann & Partner
(86) International application number: PCT/JP2020/029457
(87) International publication number: WO 2021/044777

(57) **Abstract**

The present disclosure is to measure a three-dimensional position of a specified target point highly accurately with a simple configuration. A relative position measuring device 10 includes a sensor 102 and a calculating part 50. The sensor 102 has a monocular camera 20 configured to capture an image, and a ranging part 30 configured to measure relative three-dimensional coordinates of a characteristic point in the image. The calculating part 50 determines relative three-dimensional coordinates of a target point specified in the image based on the result of ranging of the characteristic point.

## Description

### TECHNICAL FIELD

The present disclosure relates to a technique for measuring a three-dimensional relative position of a target point.

### BACKGROUND ART

Patent Document 1 discloses an estimation of a relative moving amount by using a partial image of a road surface area.

### [Reference Document of Conventional Art]

### [Patent Document]

[Patent Document 1] JP2014-194361A

### DESCRIPTION OF THE DISCLOSURE

### [Problem to be Solved by the Disclosure]

However, the three-dimensional position of the specified target point cannot be measured highly accurately with a simple configuration.

Therefore, one purpose of the present disclosure is to measure a three-dimensional position of a specified target point highly accurately with a simple configuration.

### [Means for Solving the Problem]

A relative position measuring device includes a sensor and a calculating part. The sensor has a ranging part configured to measure a three-dimensional relative position of a measuring point on the basis of a sensor position. The calculating part determines a three-dimensional relative position of a target point specified in an image on the basis of the sensor position based on the three-dimensional relative position of the measuring point.

According to this configuration, three-dimensional coordinates of the target point is determined with the configuration comprised of a monocular camera, the ranging part, and the calculating part.

### [Effect of the Disclosure]

According to the present disclosure, a three-dimensional position of a specified target point can be measured highly accurately with a simple configuration.

### BRIEF DESCRIPTION OF DRAWINGS

Fig. 1 is a functional block diagram illustrating a configuration of a relative position measuring device according to a first embodiment.
Fig. 2 is a flowchart illustrating a relative position measuring method according to the first embodiment.
Fig. 3(A) is a flowchart illustrating outline processing for determining a three-dimensional relative position in the relative position measuring method, and Fig. 3(B) is a flowchart illustrating a method of extracting a candidate point in the relative position measuring method.
Fig. 4 is a flowchart illustrating a relative position measuring method according to a second embodiment.
Fig. 5(A) is a view illustrating a concept of a quay line, a arrival-at-a-shore origin, a parallel distance, and a perpendicular distance, and Fig. 5(B) is a view illustrating one example of image data of a monocular camera.
Fig. 6 is a functional block diagram illustrating a configuration of a relative position measuring device according to a third embodiment.
Fig. 7 is a flowchart illustrating a relative position measuring method according to the third embodiment.
Fig. 8 is a flowchart illustrating a determination flow of the quay line.
Fig. 9 is a flowchart illustrating a determination flow of the arrival-at-a-shore origin.
Fig. 10 is a functional block diagram illustrating a configuration of a relative position measuring device according to a fourth embodiment.
Fig. 11 is a flowchart illustrating a relative position measuring method according to the fourth embodiment.
Fig. 12 is a view illustrating a concept of a relative position measuring technique according to a fifth embodiment.
Fig. 13 is a flowchart illustrating a relative position measuring method according to the fifth embodiment.
Fig. 14 is a view illustrating a concept of a relative position measuring technique according to a sixth embodiment.
Fig. 15 is a functional block diagram illustrating a configuration of a relative position measuring device according to the sixth embodiment.
Fig. 16 is a flowchart illustrating a relative position measuring method according to the sixth embodiment.
Fig. 17 is a view illustrating a concept of measuring a relative position at an estimated position according to a seventh embodiment.
Fig. 18 is a functional block diagram illustrating a configuration of a relative position measuring device according to the seventh embodiment.
Fig. 19 is a flowchart illustrating a relative position measuring method according to the seventh embodiment.

### MODE FOR CARRYING OUT THE DISCLOSURE

### (First Embodiment)

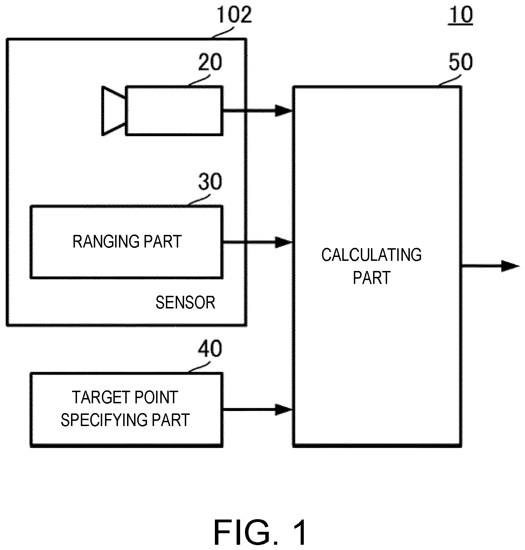

A relative position measuring device, a relative position measuring method, and a relative position measurement program according to a first embodiment will be described with reference to the drawings. Fig. 1 is a functional block diagram illustrating a configuration of the relative position measuring device according to the first embodiment.

As illustrated in Fig. 1, a relative position measuring device 10 includes a sensor 102, a target point specifying part 40, and a calculating part 50. The sensor 102 includes a monocular camera 20 and a ranging part 30. The relative position measuring device 10 is mounted to a movable body, such as a ship, for example. Note that the configuration of the present disclosure, the method, and the program can be applied when measuring a relative position of a target point which is not to be limited to the movable body. Below, the ship is described as one example of a candidate to which the relative position measuring device 10 is mounted.

The sensor 102 is mounted to the ship. A spatial relationship between the monocular camera 20 and the ranging part 30 in the sensor 102 is known. The calculating part 50 stores beforehand the spatial relationship between the monocular camera 20 and the ranging part 30. Note that the monocular camera 20 and the ranging part 30 may be disposed inside a single casing which constitutes the sensor 102, or may have separate casings.

The monocular camera 20 images a given azimuth angle range and a given elevation angle range from the ship to which the relative position measuring device 10 is mounted, and generates image data. Although the monocular camera 20 may generate the image data for at least one time point, it generates the image data for a plurality of time points. The monocular camera 20 outputs the image data to the calculating part 50.

The ranging part 30 is implemented by LIDAR, for example. The ranging part 30 performs a three-dimensional ranging within the given azimuth angle range and the given elevation angle range (i.e., a distance-measuring range) from the ship to which the relative position measuring device 10 is mounted, and generates ranging data. In detail, the ranging part 30 detects a distance to a measuring point, an azimuth angle of the measuring point, and an elevation angle of the measuring point on the basis of the position of the ranging part 30 (sensor 102), for one or more measuring points within the distance-measuring range. The measuring point may be a characteristic point extracted by a known method (for example, a characteristic point extracted by a difference of the intensity of reflected light from other part).

The ranging part 30 generates the ranging data for every characteristic point. The ranging data includes a distance from the position of the sensor 102 to the measuring point (measuring point distance), an azimuth angle of the measuring point on the basis of the position of the sensor 102 (measuring point azimuth angle), and an elevation angle of the measuring point on the basis of the position of the sensor 102 (measuring point elevation angle). The ranging part 30 outputs the ranging data to the calculating part 50.

Note that the ranging part 30 is not limited to the LIDAR, as long as it can obtain three-dimensional ranging data (a three-dimensional relative position of the measuring point on the basis of the sensor 102).

Further, an imaging timing of the image data and a ranging timing of the ranging data (a timing at which a ranging signal, such as ranging light, is transmitted) are preferably synchronized thoroughly in time. However, there may be a difference in time, as long as it is within a range which does not cause any problem in pairing of the calculating part 50 (described below).

The target point specifying part 40 accepts a specification of the target point on the image by a user's operational input, or an automatic input using AI (Artificial Intelligence), etc.

For example, when accepting the operational input from the user, the image acquired by the monocular camera 20 is displayed on a display unit. The display unit is provided with a touch panel, for example. When the user touches a display screen by using the touch panel, the specification of the target point is accepted. For example, when accepting the automatic input by the AI, the image data is inputted into the target point specifying part 40. On the image data, the target point specifying part 40 estimates a position which will be specified as the target point, based on the history, the tendency, etc. of user's past operations, and specifies this estimated position as the target point. Note that the method of specifying the target point is not limited to this method, but it may adopt various kinds of methods.

The target point specifying part 40 outputs positional coordinates on the image data at the specified target point (for example, positional coordinates of a specified pixel) to the calculating part 50 as specified information.

The calculating part 50 is implemented by a storage medium which stores a program of the relative position measuring method (relative position measurement program), and a processing unit such as CPU, which executes the program, for example. The calculating part 50 may also be implemented by an IC etc. into which the program is incorporated.

The calculating part 50 detects, based on the specified information and the image data, an azimuth angle of the target point (target point azimuth angle) on the basis of the position of the sensor 102 (corresponding to "the ship position" in this embodiment), and an elevation angle of the target point (target point elevation angle) on the basis of the position of the sensor 102. The calculating part 50 calculates a distance from the position of the sensor 102 to the target point (target point distance) by using the detected target point azimuth angle and the target point elevation angle, and the ranging data.

The calculating part 50 stores beforehand a relation between the azimuth angle of the image data and the azimuth angle of the ranging data, and a relation between the elevation angle of the image data and the elevation angle of the ranging data. The relation between the azimuth angle and the elevation angle of the image data and the ranging data can be easily obtained from a relation between the imaging area of the monocular camera 20 in the sensor 102 and the ranging area by the ranging part 30.

By using this relation, the calculating part 50 extracts a measuring point which is most likely for the target point (maximum likelihood point) by using a comparison result between the target point azimuth angle and the measuring point azimuth angle of the ranging data, and a comparison result between the target point elevation angle and the measuring point elevation angle of the ranging data. Note that one example of further concrete processing of the extraction processing for the maximum likelihood point will be described later.

The calculating part 50 determines the distance to the maximum likelihood point (measuring point distance), the azimuth angle (measuring point azimuth angle), and the elevation angle (measuring point elevation angle), as three-dimensional coordinates of the target point. Therefore, the calculating part 50 can highly accurately measure the three-dimensional coordinates of the target point (i.e., the three-dimensional relative position of the target point).

Thus, by being provided with the configuration of this embodiment, the relative position measuring device 10 can highly accurately obtain the three-dimensional coordinates (three-dimensional relative position) of the target point specified by the user etc. with the simple configuration.

### (Relative Position Measuring Method)

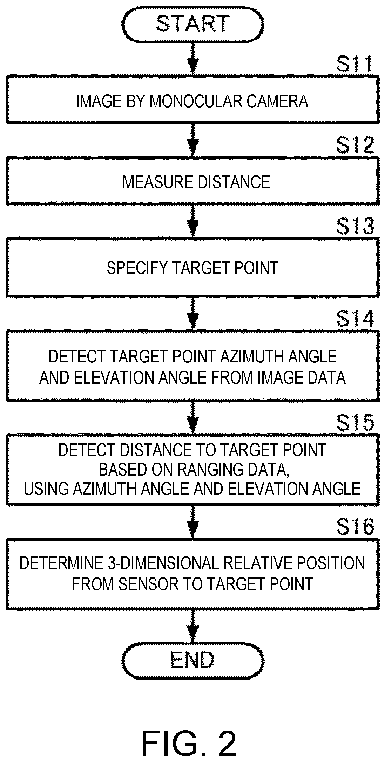

Each processing in the above description can be achieved by executing the following flowchart of the relative position measuring method. Fig. 2 is a flowchart illustrating the relative position measuring method according to the first embodiment. Note that, below, the description of the contents which have already been described above is omitted for the concrete contents of each processing.

The monocular camera 20 images and generates the image data (S11). The ranging part 30 measures the distance and generates the ranging data (S12). Further, the target point specifying part 40 specifies the target point (S13).

The calculating part 50 detects the specified target point azimuth angle and the target point elevation angle from the image data (S14). The calculating part 50 uses the target point azimuth angle and the target point elevation angle to detect the distance to the target point (target point distance) from the ranging data (the measuring point distance, the measuring point azimuth angle, and the measuring point elevation angle) (S15). The calculating part 50 uses the detected distance, azimuth angle, and elevation angle to determine the three-dimensional relative position from the sensor 102 to the target point (S16).

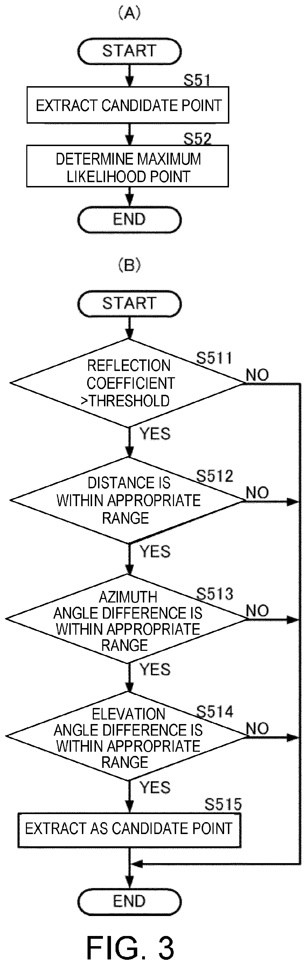

The processing which is processing corresponding to Step S15 of Fig. 2, and determines the maximum likelihood point based on a plurality of measuring points and treats it as the target point can be achieved, for example, by executing the following processing. Fig. 3(A) is a flowchart illustrating outline processing for determining the three-dimensional relative position in the relative position measuring method, and Fig. 3(B) is a flowchart illustrating an extraction method of a candidate point in the relative position measuring method.

As illustrated in Fig. 3(A), the calculating part 50 extracts the candidate point from the plurality of measuring points (S51). The calculating part 50 extracts the candidate point, for example, by using a method illustrated in Fig. 3(B). The calculating part 50 executes the following processing for each measuring point of the ranging data. If a reflection coefficient of the measuring point is above a threshold (S511: YES), if the distance is within an appropriate range (S512: YES), if an azimuth angle difference from the target point azimuth angle is within an appropriate range (S513: YES), and if an elevation angle difference from the target point elevation angle is within an appropriate range (S514: YES), the calculating part 50 extracts this measuring point as a candidate point.

On the other hand, if the reflection coefficient of the measuring point is under the threshold (S511: NO), or if the distance is outside the appropriate range (S512: NO), or if the azimuth angle difference is outside the appropriate range (S513: NO), or if the elevation angle difference is within the appropriate range (S514: NO), the calculating part 50 does not extract this characteristic point as the candidate point.

Here, the reflection coefficient is a ratio of a reception intensity of ranging light to a transmission intensity. The appropriate range of the distance is a distance range where the ranging part 30 can extract the characteristic point with given accuracy, while considering an error etc. occurring when measuring the distance. The azimuth angle difference is a difference between the azimuth angle of the specified target point on the image data (target point azimuth angle) and the azimuth angle of the measuring point (measuring point azimuth angle). The elevation angle difference is a difference between the elevation angle of the specified target point on the image data (target point elevation angle) and the elevation angle of the measuring point (measuring point elevation angle).

By using such a method, the calculating part 50 can extract the candidate point with sufficient accuracy.

The calculating part 50 determines the maximum likelihood point from the candidate point(s) (S52). For example, if there is one candidate point, the calculating part 50 uses this candidate point as the maximum likelihood point. If there are a plurality of candidate points, the calculating part 50 determines a selecting condition of the maximum likelihood point, and determines the maximum likelihood point from the plurality of candidate points. The selecting condition of the maximum likelihood point can be set suitably according to the characteristics of the target point. For example, when the target point is a single solid point (a quay wall etc. described below) and there is liquid (sea (water surface) etc. described below) in the vicinity, the selecting condition can be set based on a difference in the ranging data between solid and liquid, a difference of the ranging data according to the spatial relationship among solid, etc.

By using such a method, the calculating part 50 can determine the maximum likelihood point with high accuracy.

Note that, in the extraction of the candidate point, the calculating part 50 can extract the candidate point with a given accuracy by using at least the azimuth angle difference and the elevation angle difference. Then, by performing this processing, the calculation load of the extraction processing of the candidate point can be reduced, while achieving the given accuracy.

Further, the calculating part 50 may extract the maximum likelihood point only using the comparison result of the azimuth angles (azimuth angle difference) or the comparison result of the elevation angles (elevation angle difference). However, the accuracy of the maximum likelihood point improves by using the comparison result of the azimuth angles (azimuth angle difference) and the comparison result of the elevation angles (elevation angle difference).

The calculating part 50 may use at least one of the selection according to the reflection coefficient and the selection according to the distance.

That is, the calculating part 50 can extract the candidate point by suitably using each condition described above, in consideration of the accuracy and the processing load.

### (Second Embodiment)

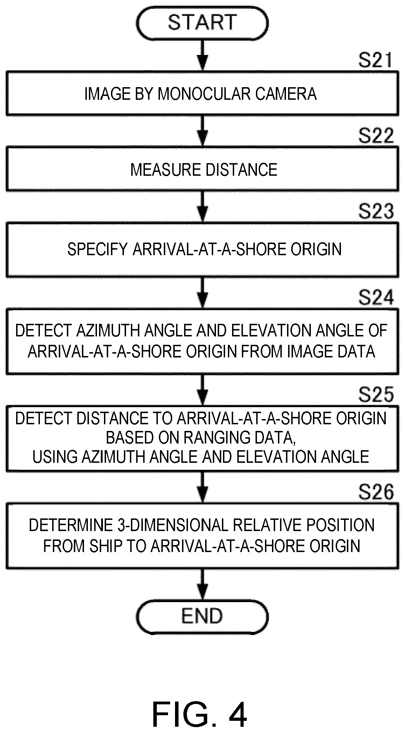

A relative position measuring device, a relative position measuring method, and a relative position measurement program according to a second embodiment are described with reference to the drawings. Fig. 4 is a flowchart illustrating the relative position measuring method according to the second embodiment.

A configuration of the relative position measuring device according to the second embodiment is similar to the configuration of the relative position measuring device according to the first embodiment, and therefore, description of the configuration thereof is omitted. Further, the relative position measuring method according to the second embodiment differs from the relative position measuring method according to the first embodiment in that an arrival-at-a-shore origin is specified as the target point. Therefore, below, only the relative position measuring method is described.

The arrival-at-a-shore origin is a reference point in a quay at which the ship arrives, and it may be the position of a N-flag etc., a position specified by the user, a position where a given position of the ship approaches the quay most when arriving at a shore, etc.

As illustrated in Fig. 4, the monocular camera 20 images an area including the quay having the arrival-at-a-shore origin, and generates the image data (S21). Then, the ranging part 30 measures the distance and generates the ranging data of the area including the quay having the arrival-at-a-shore origin (S22). Then, the target point specifying part 40 specifies the arrival-at-a-shore origin as the target point (S23).

The calculating part 50 detects the azimuth angle (target point azimuth angle) and the elevation angle (target point elevation angle) of the specified arrival-at-a-shore origin from the image data (S24). As illustrated in the first embodiment described above, the calculating part 50 uses the azimuth angle (target point azimuth angle) and the elevation angle (target point elevation angle) to detect the distance to the arrival-at-a-shore origin based on the ranging data (the measuring point distance, the measuring point azimuth angle, and the measuring point elevation angle) (S25). The calculating part 50 uses the detected distance, azimuth angle, and elevation angle to determine the three-dimensional relative position from the ship provided with the sensor 102 to the arrival-at-a-shore origin (S26).

By using such processing, the relative position measuring device can highly accurately measure the three-dimensional relative position to the arrival-at-a-shore origin. Thus, since the relative position to the arrival-at-a-shore origin can be highly accurately obtained, the user (a steersman etc.) can safely and certainly make the ship arrive at the given position of the quay.

### (Third Embodiment)

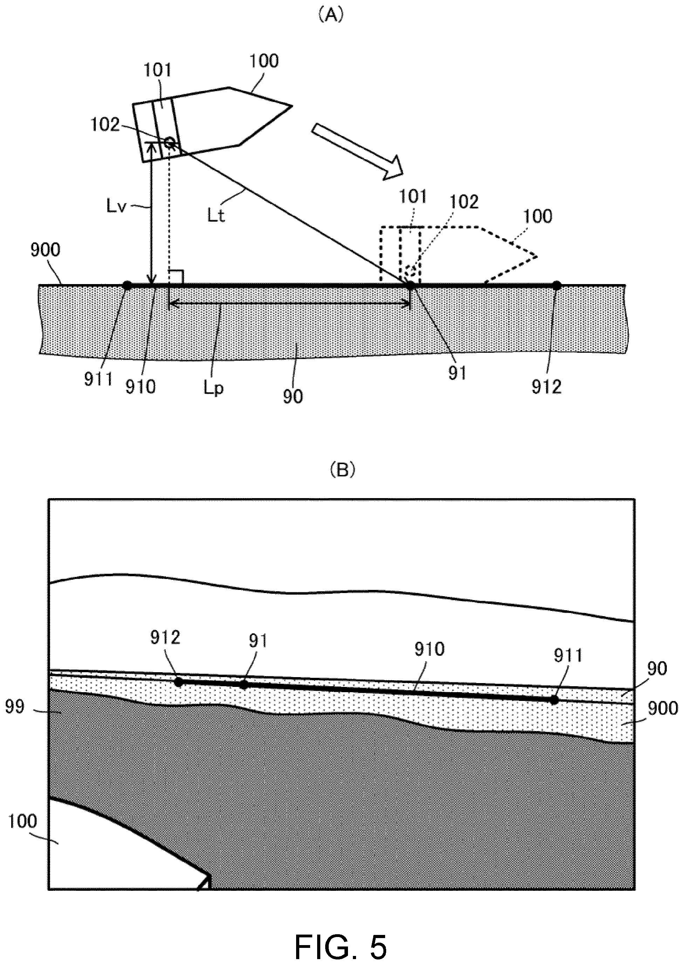

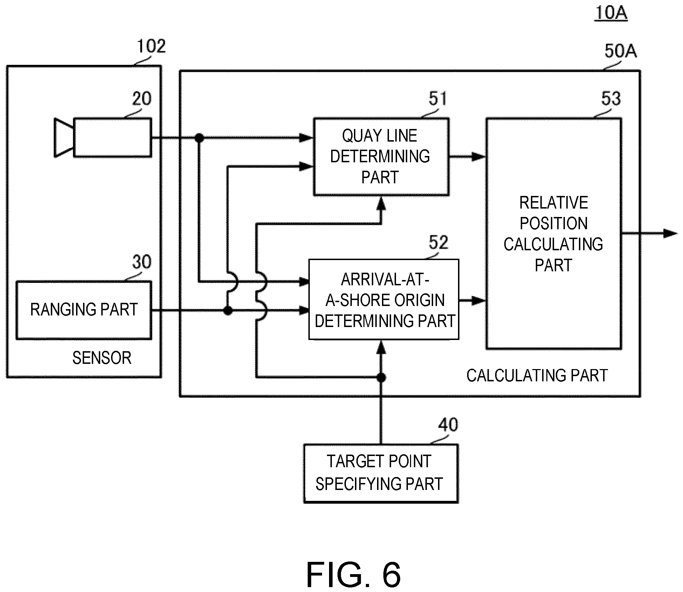

A relative position measuring device, a relative position measuring method, and a relative position measurement program according to a third embodiment are described with reference to the drawings. Fig. 5(A) is a view illustrating a concept of a quay line, the arrival-at-a-shore origin, a parallel distance, and a perpendicular distance, and Fig. 5(B) is a view illustrating one example of the image data of the monocular camera. Fig. 6 is a functional block diagram illustrating a configuration of the relative position measuring device according to the third embodiment.

As illustrated in Figs. 5(A) and 5(B), for example, a quay line 910 is a line which forms an upper end of a quay surface 900 of a quay 90 facing the sea 99, and is a horizontal line. The quay line 910 is a line segment which connects a start point 911 and an end point 912. For example, the quay line 910 is expressed by three-dimensional coordinates of the start point 911 and three-dimensional coordinates of the end point 912, and a length of a line segment which connects the start point 911 and the end point 912, and an extending direction (i.e., a vector quantity).

As described above, the arrival-at-a-shore origin 91 is a reference point in the quay at which the ship arrives, and exists substantially on the quay line 910.

As illustrated in Fig. 5(A), a relative position measuring device 10A according to the third embodiment calculates a perpendicular distance Lv and a parallel distance Lp, as the relative position. The perpendicular distance Lv is a distance between a ship 100 on the sea 99 (sea surface) and the quay line 910. In more detail, for example, the perpendicular distance Lv is a distance between the sensor 102 in a bridge 101 of the ship 100 and the quay line 910. The parallel distance Lp is a distance between an intersection (a point which forms the perpendicular distance Lv) between a perpendicular line to the quay line 910 which is drawn from the sensor 102, and the quay line 910, and the arrival-at-a-shore origin 91. A shortest distance Lt is a distance between the sensor 102 and the arrival-at-a-shore origin 91.

As illustrated in Fig. 6, the relative position measuring device 10A according to the third embodiment differs from the relative position measuring devices 10 according to the first and second embodiments, in a configuration of a calculating part 50A. Other configurations of the relative position measuring device 10A are similar to those of the relative position measuring devices 10, and therefore, description of the similar parts is omitted.

The calculating part 50A includes a quay line determining part 51, an arrival-at-a-shore origin determining part 52, and a relative position calculating part 53.

The target point specifying part 40 accepts, from the user, the AI, etc., a specification of a plurality of target points for determining the quay line 910. Further, the target point specifying part 40 accepts from the user, the AI, etc., a specification of the arrival-at-a-shore origin 91. Note that, as will be described later, the target point for the arrival-at-a-shore origin 91 may be used for a plurality of target points for determining the quay line 910.

The quay line determining part 51 determines the quay line 910 based on the plurality of target points specified by the target point specifying part 40. For example, the quay line determining part 51 determines the maximum likelihood point as described above to each of the plurality of specified target points. The quay line determining part 51 extracts at least two points which are lined up horizontally from the plurality of maximum likelihood points, with reference to the elevation angle etc. Then, the quay line determining part 51 sets a line segment which connects the at least two points as the quay line 910. Here, the two points at both ends of the quay line 910 are used as the start point 911 and the end point 912 described above. For example, the data of the quay line 910 includes the three-dimensional coordinates (the distance, the azimuth angle, the elevation angle) of the plurality of measuring points on the quay line 910 including the start point 911 and the end point 912.

Note that the quay line determining part 51 may detect the two points lined up horizontally while they are the image data, and then determine the maximum likelihood point for each point.

The arrival-at-a-shore origin determining part 52 determines the arrival-at-a-shore origin 91 based on the target point specified by the target point specifying part 40. For example, the arrival-at-a-shore origin determining part 52 determines the maximum likelihood point as described above for the specified target point. Then, the arrival-at-a-shore origin determining part 52 sets the coordinates of the maximum likelihood point as the coordinates of the arrival-at-a-shore origin 91.

The relative position calculating part 53 calculates the perpendicular distance Lv and the parallel distance Lp by using the quay line 910 and the arrival-at-a-shore origin 91. The relative position calculating part 53 extracts the measuring point of which the perpendicular distance Lv is also the shortest from the plurality of measuring points located on the quay line 910, as an intersection between the perpendicular line to the quay line 910. The relative position calculating part 53 sets the distance for this measuring point as the perpendicular distance Lv. Then, the relative position calculating part 53 uses the three-dimensional coordinates of the measuring point at the intersection of this perpendicular line and the three-dimensional coordinates of the arrival-at-a-shore origin 91, and a known geometric distance calculation to calculate a distance between the measuring point at the intersection of this perpendicular line and the arrival-at-a-shore origin 91. The relative position calculating part 53 sets this distance as the parallel distance Lp.

By using such a configuration and processing, the relative position measuring device 10A can measure easily and highly accurately the perpendicular distance Lv from the ship 100 to the quay 90 which includes the arrival-at-a-shore origin 91, and the parallel distance Lp which is parallel to the quay line 910. Therefore, the user can grasp how much the ship should approach the quay 90, or how much it should travel along the quay 90.

### (Relative Position Measuring Method)

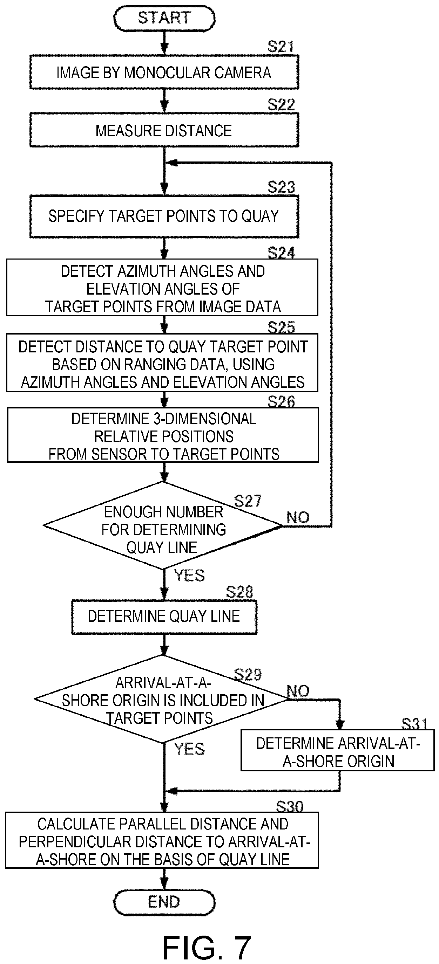

Each processing in the above description can be implemented by executing the following flowchart of the relative position measuring method. Fig. 7 is a flowchart illustrating the relative position measuring method according to the third embodiment. Note that, below, for the concrete contents of each processing, the description of the contents, which have already been described above, is omitted.

The monocular camera 20 images the area including the quay having the arrival-at-a-shore origin, and generates the image data (S21). Then, the ranging part 30 measures the distance and generates the ranging data of the area including the quay having the arrival-at-a-shore origin (S22). Further, the target point specifying part 40 specifies the target points to the quay (S23). The target points to the quay may or may not include the arrival-at-a-shore origin.

The calculating part 50 detects, from the image data, the azimuth angles (target point azimuth angles) and the elevation angles (target point elevation angles) of the plurality of specified target points (S24). The calculating part 50 uses the target point azimuth angle and the target point elevation angle to detect the distance to each of the plurality of target points based on the ranging data (the measuring point distance, the measuring point azimuth angle, the measuring point elevation angle) (S25). The calculating part 50 uses the detected distance, azimuth angle, and elevation angle to determine the three-dimensional relative positions of the plurality of target points from the ship provided with the sensor 102 (S26).

The calculating part 50 detects whether enough number of target points is acquired for determining the quay line 910. If the enough number of target points for determining the quay line 910 is not acquired (S27: NO), the calculating part 50 returns to the specification of the target points (S23).

If the enough number of target points for setting the quay line 910 is acquired (S27: YES), the calculating part 50 determines the quay line 910 (S28).

If the arrival-at-a-shore origin 91 is included in the target points (S29: YES), the calculating part 50 calculates, based on the quay line 910 and the arrival-at-a-shore origin 91, the parallel distance Lp and the perpendicular distance Lv to the arrival-at-a-shore origin 91 on the basis of the quay line 910 (S30).

If the arrival-at-a-shore origin 91 is not included in the target points (S29: NO), the calculating part 50 determines the arrival-at-a-shore origin 91 (S31), and calculates the parallel distance Lp and the perpendicular distance Lv (S30).

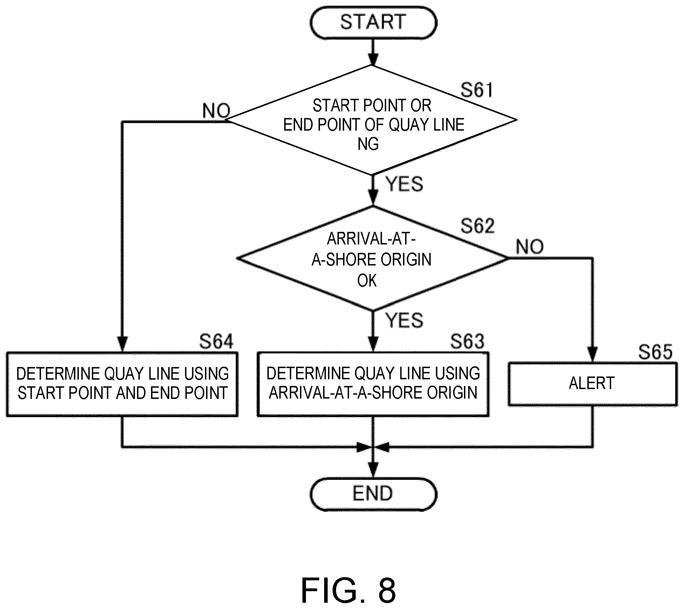

Note that the determination of the quay line 910 can be achieved by the following processing, for example. Fig. 8 is a flowchart illustrating a determination flow of the quay line.

If the calculating part 50 cannot detect either the start point 911 or the end point 912 of the quay line 910 (S61: YES), it detects the arrival-at-a-shore origin 91. If the arrival-at-a-shore origin 91 is detected (S62: YES), the calculating part 50 determines the quay line 910 based on the detected point of the start point 911 or the end point 912, and the arrival-at-a-shore origin 91 (S63).

If the start point 911 and the end point 912 are detected (S61: NO), the calculating part 50 determines the quay line 910 based on the start point 911 and the end point 912 (S64).

Note that, if the calculating part 50 cannot detect either the start point 911 or the end point 912 (S61: YES) and if it cannot detect the arrival-at-a-shore origin 91 (S62: NO), it issues an alert (S65).

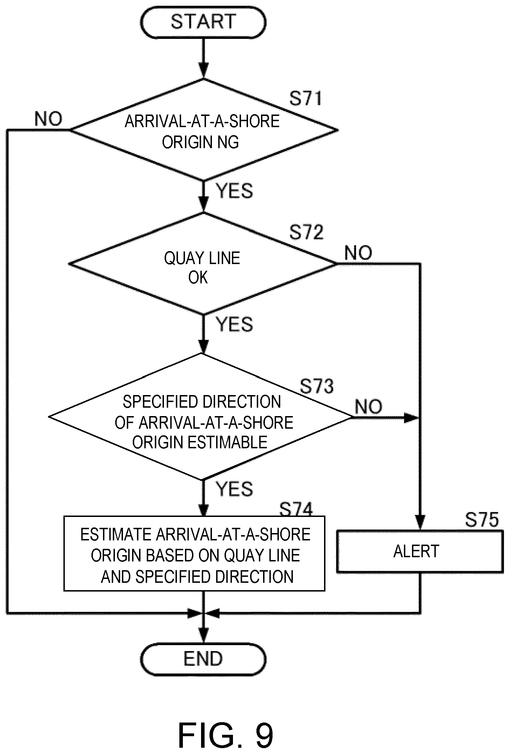

Further, the determination of the arrival-at-a-shore origin 91 can be achieved by the following processing, for example. Fig. 9 is a flowchart illustrating a determination flow of the arrival-at-a-shore origin.

If the arrival-at-a-shore origin 91 cannot be detected from the characteristic points (S71: YES), the calculating part 50 detects the quay line 910. If the quay line 910 is detected (S72: YES), the calculating part 50 determines whether a specified direction (for example, azimuth angle) of the arrival-at-a-shore origin 91 can be estimated. If the specified direction of the arrival-at-a-shore origin 91 is detectable (S73: YES), the calculating part 50 estimates the arrival-at-a-shore origin 91 based on the quay line 910 and the specified direction (S74). For example, if the specified direction is known, the calculating part 50 sets a virtual straight line parallel to the specified direction, and estimates an intersection between the virtual straight line and the quay line 910 as the arrival-at-a-shore origin 91. Further, for example, if a traveling direction of the ship 100 is known, the calculating part 50 sets a virtual straight line parallel to the traveling direction, and estimates an intersection between the virtual straight line and the quay line 910 as the arrival-at-a-shore origin 91.

If the arrival-at-a-shore origin 91 can be detected from the measuring points (S71: NO), the calculating part 50 determines this measuring point as the arrival-at-a-shore origin 91.

Note that if the arrival-at-a-shore origin 91 cannot be detected from the measuring points (S71: YES), if the quay line 910 cannot be detected (S72: NO), or if the specified direction of the arrival-at-a-shore origin 91 is not detected (S73: NO), the calculating part 50 issues an alert (S75).

### (Fourth Embodiment)

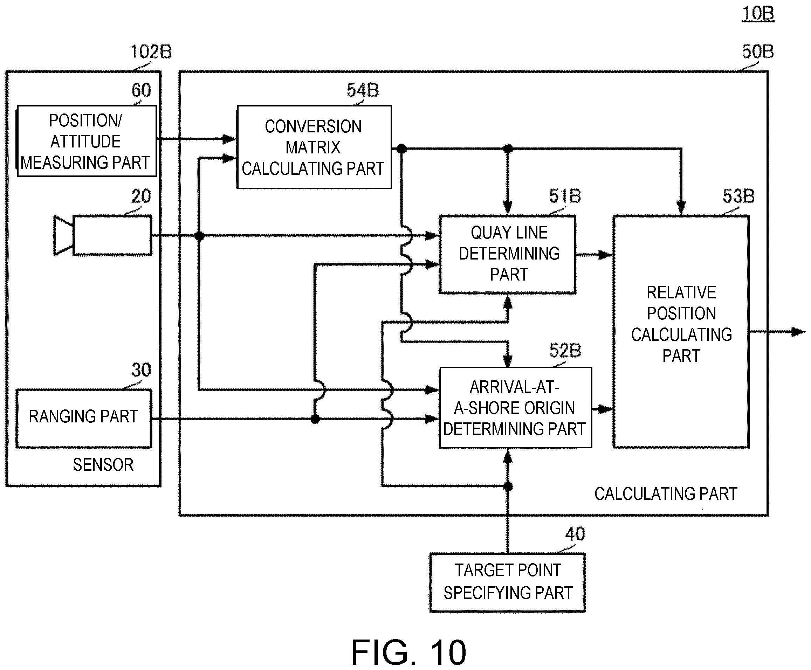

A relative position measuring device, a relative position measuring method, and a relative position measurement program according to a fourth embodiment are described with reference to the drawings. Fig. 10 is a functional block diagram illustrating a configuration of the relative position measuring device according to the fourth embodiment.

As illustrated in Fig. 10, a relative position measuring device 10B includes a sensor 102B, the target point specifying part 40, and a calculating part 50B. Roughly, fundamental measurement processing for the three-dimensional relative position by the relative position measuring device 10B is similar to that of the relative position measuring device 10A according to the above embodiment, and differs in that the relative position is measured (calculated) on the basis of the world coordinate system. The world coordinate system is a coordinate system fixed to the real space, and it is also referred to as the "global coordinate system." Therefore, below, only differences from the above embodiment are described concretely.

The sensor 102B includes the monocular camera 20, the ranging part 30, and a position/attitude measuring part 60. That is, the sensor 102B has a configuration obtained by adding the position/attitude measuring part 60 to the sensor 102 described above. The calculating part 50B includes a quay line determining part 51B, an arrival-at-a-shore origin determining part 52B, a relative position calculating part 53B, and a conversion matrix calculating part 54B.

For example, the position/attitude measuring part 60 is implemented by a plurality of positioning antennas which receive the positioning signals, a receiving part which performs acquisition and tracking of the received positioning signals and detects the code phase and the carrier phase, and a position attitude calculating part which calculates the position and the attitude angle based on the code phase and the carrier phase. Note that the position/attitude measuring part 60 may be implemented by a combination of a positioning antenna and an inertia sensor. The position/attitude measuring part 60 measures a three-dimensional position and a three-dimensional attitude angle of the ship. Here, the position/attitude measuring part 60 measures the three-dimensional position and attitude angle of the ship in the world coordinate system (absolute coordinate system). The position/attitude measuring part 60 outputs the position and the attitude angle to the conversion matrix calculating part 54B of the calculating part 50B.

The conversion matrix calculating part 54B calculates a coordinate conversion matrix between the coordinate system of the monocular camera 20 and the ranging part 30, and the world coordinate system, based on a deviation of a change in the position/attitude angle from the position/attitude measuring part 60 and a change in the position/attitude angle of a specifying point in the image of the monocular camera 20. The conversion matrix calculating part 54B gives the coordinate conversion matrix to the quay line determining part 51B, the arrival-at-a-shore origin determining part 52B, and the relative position calculating part 53B.

Although the quay line determining part 51B fundamentally performs similar processing to the quay line determining part 51 described above, it uses the coordinate conversion matrix to determine the quay line 910 in the world coordinate system.

Although the arrival-at-a-shore origin determining part 52B fundamentally performs similar processing to the arrival-at-a-shore origin determining part 52 described above, it uses the coordinate conversion matrix to determine the arrival-at-a-shore origin in the world coordinate system.

Although the relative position calculating part 53B fundamentally performs similar processing to the relative position calculating part 53 described above, it uses the coordinate conversion matrix to calculate the relative position in the world coordinate system. Here, the relative position calculating part 53B may set the coordinates of the arrival-at-a-shore origin 91 as the origin of the world coordinate system.

By having such a configuration, the coordinates of the quay line 910 and the arrival-at-a-shore origin 91 do not change, even if the ship moves. Therefore, the relative position measuring device 10B is not influenced by an error due to a re-specification of the arrival-at-a-shore origin 91 or the quay line 910 as the ship moves. Therefore, the relative position measuring device 10B can measure the relative position more accurately.

### (Relative Position Measuring Method)

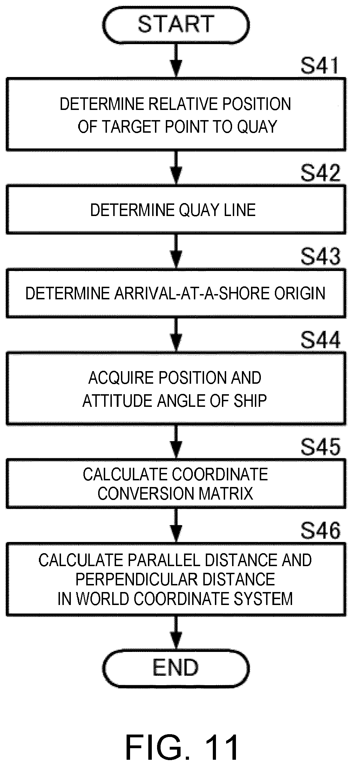

Each processing in the above description can be achieved by executing the following flowchart of the relative position measuring method. Fig. 11 is a flowchart illustrating the relative position measuring method according to the fourth embodiment. Note that, below, description of the concrete contents of each processing, which have already been described above and which are easily understood from the contents described above, is omitted.

The calculating part 50B determines the relative position of the target point (S41). The calculating part 50B determines the quay line 910 (S42). The calculating part 50B determines the arrival-at-a-shore origin 91 (S43).

The calculating part 50B acquires the position and the attitude angle of the ship from the position/attitude measuring part 60 (S44). The calculating part 50B uses the change in the position and the attitude angle of the ship, and the change in the specifying point (for example, target point) of the image data to calculate the coordinate conversion matrix between the world coordinate system, and the coordinate system of the monocular camera 20 and the ranging part 30 (S45).

The calculating part 50B uses the coordinate conversion matrix to calculate the parallel distance Lp and the perpendicular distance Lv in the world coordinate system (S46).

### (Fifth Embodiment)

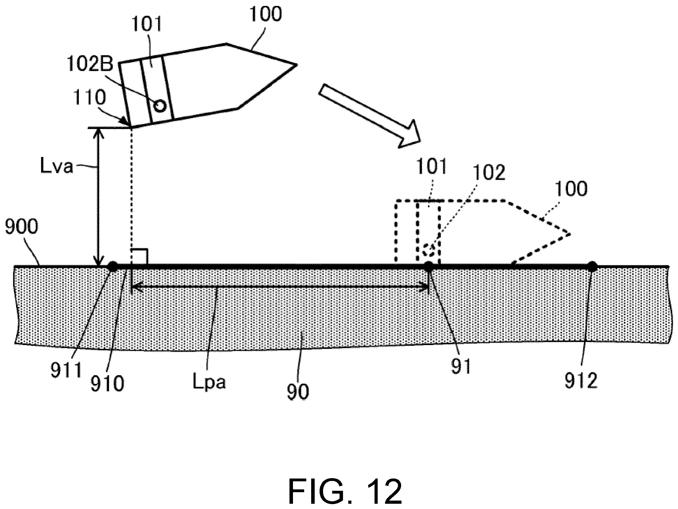

A relative position measuring device, a relative position measuring method, and a relative position measurement program according to a fifth embodiment are described with reference to the drawings. Fig. 12 is a view illustrating a concept of a relative position measuring technique according to the fifth embodiment. The fundamental configuration of the relative position measuring device according to the fifth embodiment is similar to that of the relative position measuring device according to the fourth embodiment described above, and therefore, description of the similar parts is omitted.

As illustrated in Fig. 12, the relative position measuring device according to the fifth embodiment measures a three-dimensional relative position between a specific position of the ship 100, for example, the shortest position to the quay line 910 (in the case of Fig. 12, a starboard end 110 of the stern), and the arrival-at-a-shore origin 91.

The calculating part 50B stores a spatial relationship between the sensor 102B and each position of the ship 100 (for example, a plurality of positions corresponding to the outer edge of the ship 100), for example, in a hull coordinate system.

The calculating part 50B calculates the coordinate conversion matrix between the hull coordinate system and the world coordinate system based on the attitude angle from the position/attitude measuring part 60. Then, the calculating part 50B calculates the positional coordinates of a given position of the ship 100 (here, for example, the starboard end 110 of the stern in the world coordinate system). Here, the position of the starboard end 110 of the stern corresponds to a "ship position" in this embodiment.

The relative position calculating part 53B of the calculating part 50B uses, in the world coordinate system, the positional coordinates of the starboard end 110 of the stern, the coordinates of the quay line 910, and the positional coordinates of the arrival-at-a-shore origin 91 to calculate a shortest perpendicular distance Lva and a parallel distance Lpa between the ship 100 and the quay line 910. The shortest perpendicular distance Lva is a distance to the starboard end 110 of the stern from an intersection between the quay line 910 and a perpendicular line to the quay line 910 which is drawn from the starboard end 110 of the stern. The parallel distance Lpa is a distance between the intersection of this perpendicular line and the arrival-at-a-shore origin 91.

Note that, here, although the starboard end 110 of the stern is described as the example, if coordinates of a plurality of positions corresponding to the outer edge of the ship 100 as described above are stored beforehand, the calculating part 50B can detect a position of the ship 100 closest to the quay line 910 at a measurement timing based on the coordinates of the quay line 910 and the coordinates of each position. Then, the calculating part 50B can calculate the shortest perpendicular distance Lva and the parallel distance Lpa by using this closest position (corresponding to the "ship position" in this embodiment), the quay line 910, and the arrival-at-a-shore origin 91.

### (Relative Position Measuring Method)

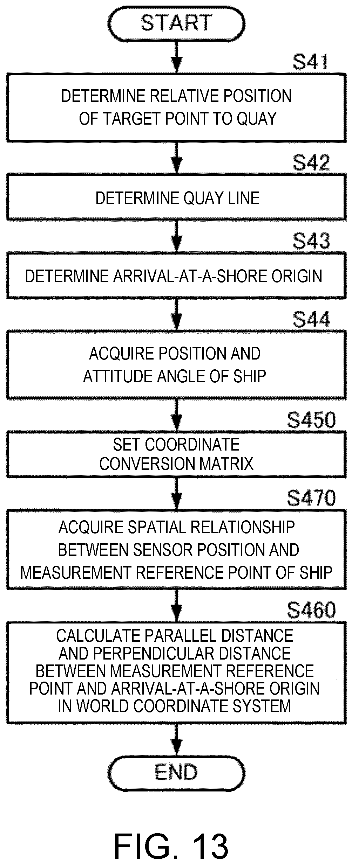

Each processing in the above description can be achieved by executing the following flowchart of the relative position measuring method. Fig. 13 is a flowchart illustrating the relative position measuring method according to the fifth embodiment. Note that, below, description of the concrete contents of each processing, which have already been described above and which are easily understood from the contents described above, is omitted. Further, Steps S41-S44 are similar to those in the flowchart described above, and therefore, description thereof is omitted.

The calculating part 50B uses the change in the position and the attitude angle of the ship, and the change in the specifying point of the image data to calculate the coordinate conversion matrix between the world coordinate system and the coordinate system of the monocular camera 20 and the ranging part 30, and uses the attitude angle to calculate the coordinate conversion matrix between the hull coordinate system and the world coordinate system (S450).

The calculating part 50B acquires the spatial relationship between the position of the sensor 102B and the given point of the ship (for example, the shortest point to the quay line 910 (corresponding to the "ship position")) (S470).

By using the two coordinate conversion matrixes described above, the calculating part 50B calculates, in the world coordinate system, the parallel distance and the perpendicular distance between the given point and the arrival-at-a-shore origin (for example, the parallel distance Lpa and the shortest perpendicular distance Lva) (S460).

By using such a configuration and processing, the relative position measuring device can measure more accurately the distance between the given point of the ship 100 and the quay 90 (for example, the distance between the position of the ship 100 closest to the quay 90, and the quay 90).

### (Sixth Embodiment)

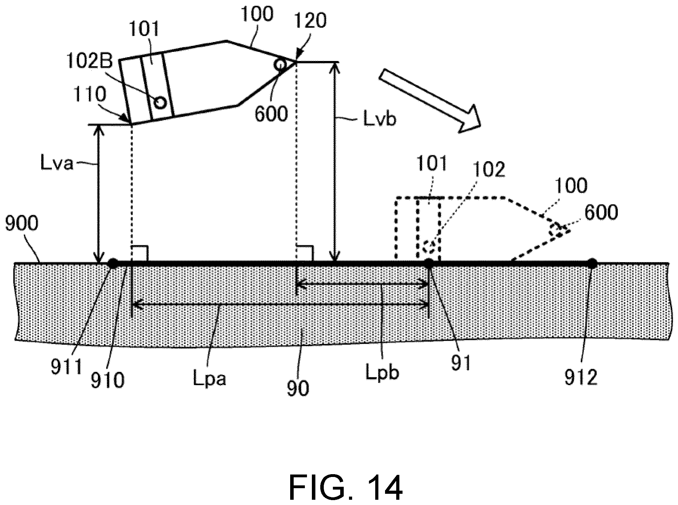

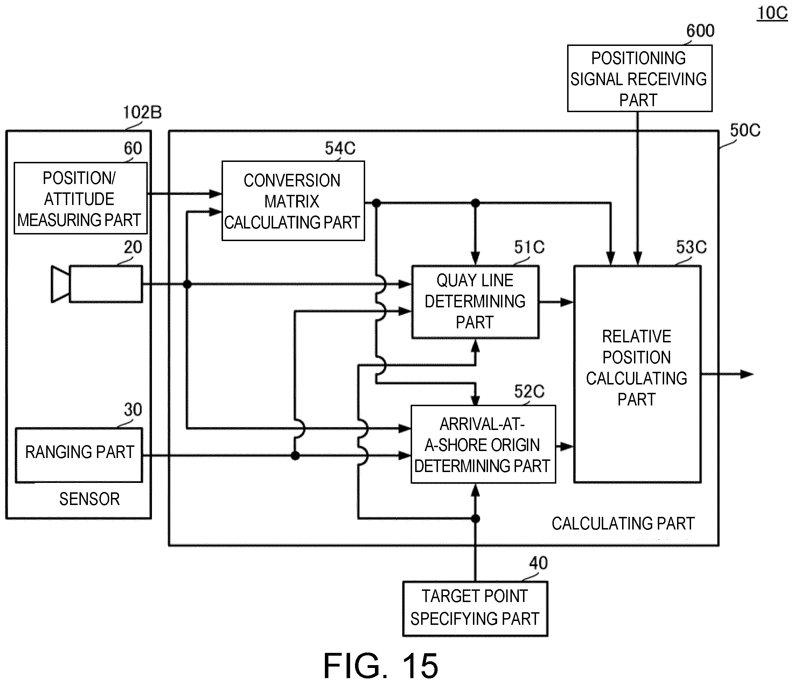

A relative position measuring device, a relative position measuring method, and a relative position measurement program according to a sixth embodiment are described with reference to the drawings. Fig. 14 is a view illustrating a concept of a relative position measuring technique according to the sixth embodiment. Fig. 15 is a functional block diagram illustrating a configuration of the relative position measuring device according to the sixth embodiment. The fundamental configuration of the relative position measuring device according to the sixth embodiment is similar to that of the relative position measuring device according to the fifth embodiment described above, and therefore, description of the similar parts is omitted.

As illustrated in Fig. 14, the relative position measuring device according to the sixth embodiment measures, similar to the relative position measuring device of the fifth embodiment, a three-dimensional relative position between a given point of the ship 100 (corresponding to the "ship position"), for example, the shortest position to the quay line 910 (in the case of Fig. 14, the starboard end 110 of the stern and a bow 120), and the arrival-at-a-shore origin 91.

As illustrated in Fig. 15, a relative position measuring devices 10C differs from the relative position measuring device 10B in that it is provided with a calculating part 50C and a positioning signal receiving part 600. Other configurations of the relative position measuring device 10C are similar to those of the relative position measuring device 10B, and therefore, description of the similar parts is omitted. Note that a quay line determining part 51C is similar to the quay line determining part 51B, and an arrival-at-a-shore origin determining part 52C is similar to the arrival-at-a-shore origin determining part 52A.

The positioning signal receiving part 600 is mounted on the bow 120 of the ship 100. The positioning signal receiving part 600 is implemented by an antenna which receives positioning signals, and a receiving part which detects a code phase and a carrier phase by acquisition and tracking of the positioning signals. The positioning signal receiving part 600 outputs the code phase and the carrier phase to a relative position calculating part 53C.

As described above, a conversion matrix calculating part 54C calculates the coordinate conversion matrix (first coordinate conversion matrix) between the world coordinate system and the coordinate system of the monocular camera 20 and the ranging part 30, and the coordinate conversion matrix (second coordinate conversion matrix) between the hull coordinate system and the world coordinate system. The conversion matrix calculating part 54C gives the first coordinate conversion matrix to the quay line determining part 51C and the arrival-at-a-shore origin determining part 52C. The conversion matrix calculating part 54C outputs the first coordinate conversion matrix and the second coordinate conversion matrix to the relative position calculating part 53C.

The code phase and the carrier phase are also inputted into the relative position calculating part 53C from the position/attitude measuring part 60.

The relative position calculating part 53C calculates a spatial relationship between the sensor 102B and the positioning signal receiving part 600, for example, based on a difference between an integrated value of the carrier phase from the position/attitude measuring part 60 and an integrated value of the carrier phase from the positioning signal receiving part 600, and an independent positioning result calculated from each code phase. In other words, the relative position calculating part 53C calculates a spatial relationship between the sensor 102B and the bow 120. Here, the relative position calculating part 53C can highly accurately calculate this spatial relationship by using the difference between the carrier phase integrated values. Therefore, for example, even if the ship 100 is long and the distance between the bridge 101 and the bow 120 is long, the relative position calculating part 53C can highly accurately calculate the spatial relationship between the sensor 102B and the bow 120.

Then, the relative position calculating part 53C calculates a perpendicular distance Lvb and a parallel distance Lpb between the bow 120 and the quay line 910 based on the positional coordinates of the sensor 102B, the spatial relationship between the sensor 102B and the bow 120, the coordinates of the quay line 910, and the positional coordinates of the arrival-at-a-shore origin 91.

The perpendicular distance Lvb is a distance from the bow 120 (in more detail, the positioning signal receiving part 600) to an intersection between a perpendicular line to the quay line 910 which is drawn from the bow 120 (in more detail, the positioning signal receiving part 600) and the quay line 910. The parallel distance Lpa is a distance between the intersection of this perpendicular line and the arrival-at-a-shore origin 91.

Here, by using the two conversion matrixes, the relative position calculating part 53C can highly accurately calculate the perpendicular distance Lvb and the parallel distance Lpb in the world coordinate system. Then, as described above, since the spatial relationship between the sensor 102B and the bow 120 is calculated highly accurately, the relative position calculating part 53C can more accurately calculate the perpendicular distance Lvb and the parallel distance Lpb.

### (Relative Position Measuring Method)

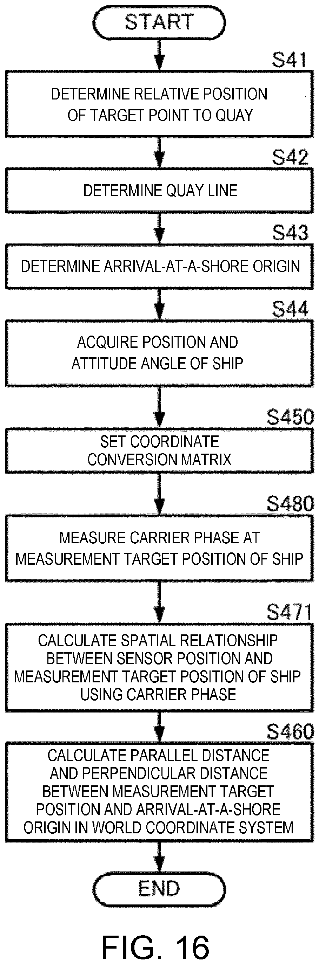

Each processing in the above description can be achieved by executing the following flowchart of the relative position measuring method. Fig. 16 is a flowchart illustrating the relative position measuring method according to the sixth embodiment. Note that, below, description of the concrete contents of each processing, which have already been described above and which are easily understood from the contents described above, is omitted. Further, Steps S41-S450 are similar to those of the flowchart described above, and therefore, description thereof is omitted.

The positioning signal receiving part 600 disposed at the given point of the ship 100 measures the carrier phase (S480).

The calculating part 50C acquires the carrier phase from the position/attitude measuring part 60 of the sensor 102B and the positioning signal receiving part 600. The calculating part 50C calculates the spatial relationship between the position of the sensor 102B and the measurement target point of the ship (for example, the shortest point to the quay line 910) by using the carrier phase (S471).

By using the two coordinate conversion matrixes described above, the calculating part 50B calculates the parallel distance and the perpendicular distance (for example, the parallel distance Lpb and the perpendicular distance Lvb) between the measurement target point and the arrival-at-a-shore origin in the world coordinate system (S460).

By using such a configuration and processing, the relative position measuring device 10C can measure more accurately the distance between the given point of the ship 100 and the quay 90 (for example, the distance between the bow 120 of the ship 100, and the quay 90). Here, the spatial relationship between the position of the sensor 102B and the given point is calculated highly accurately by using the carrier phase. Therefore, the relative position measuring device 10C can highly accurately calculate the distance between the given point and the quay 90, even if the given point is far away from the sensor 102B.

### (Seventh Embodiment)

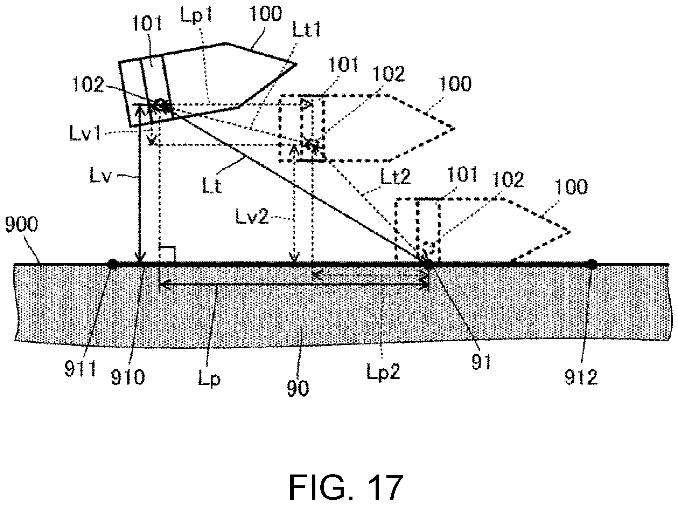

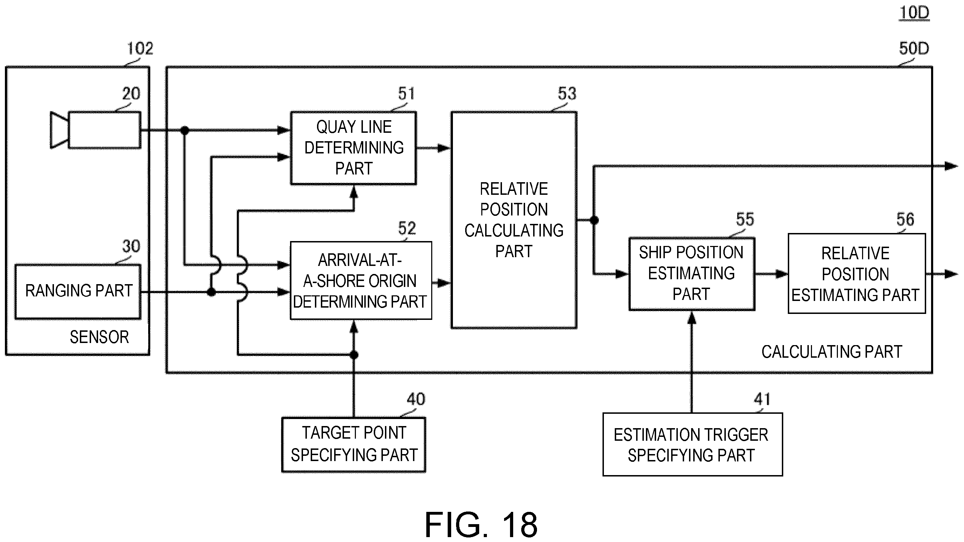

A relative position measuring device, a relative position measuring method, and a relative position measurement program according to a seventh embodiment are described with reference to the drawings. Fig. 17 is a view illustrating a concept of measuring a relative position at an estimated position according to the seventh embodiment. Fig. 18 is a functional block diagram illustrating a configuration of the relative position measuring device according to the seventh embodiment.

As illustrated in Fig. 17, a relative position measuring technique (device, method, and program) according to the seventh embodiment differs from each embodiment described above in that it measures a relative position between a target point and an estimated position of the ship after or before a given period of time. Below, differences from the relative position measuring technique according to the third embodiment are described, and description of the same parts is omitted.

A relative position measuring device 10D according to the seventh embodiment estimates the position of the ship 100 at a timing which is offset from the present time by the given period of time. For example, the relative position measuring device 10D has a functional part which can calculate the speed, acceleration, angular velocity, etc. of the ship 100 like the position/attitude measuring part 60 described above. The functional part may use positioning signals of the GNSS, or may be an inertia sensor. The relative position measuring device 10D estimates the position of the ship 100 at the estimation time which is offset from the present time by the given period of time, based on the speed, acceleration, angular velocity, etc. of the ship 100 measured by the functional part. Note that the offsetting direction of time may be the past or the future.

The relative position measuring device 10D calculates the relative position between the present position and the estimated position (i.e., a parallel distance Lp1 and a perpendicular distance Lv1 between the present position and the estimated position) based on the positional coordinates of the present position (position at the present time) and the positional coordinates of the estimated position.

The relative position measuring device 10D calculates a parallel distance Lp2 at the estimated position by using the parallel distance Lp at the present position, and the parallel distance Lp1 between the present position and the estimated position. Further, the relative position measuring device 10D calculates a perpendicular distance Lv2 at the estimated position by using the perpendicular distance Lv1 at the present position, and the perpendicular distance Lv between the present position and the estimated position. Therefore, the relative position measuring device 10D can estimate the parallel distance Lp2 and the perpendicular distance Lv2 at the estimated position and the target point (arrival-at-a-shore origin 91).

In order to achieve this function, as illustrated in Fig. 18, the relative position measuring device 10D includes, in addition to the configuration of the relative position measuring device 10A according to the third embodiment illustrated in Fig. 6, an estimation trigger specifying part 41, a ship position estimating part 55, and a relative position estimating part 56. Note that, although illustration is omitted, the relative position measuring device 10D is provided at the sensor 102 with the position/attitude measuring part 60. The speed, acceleration, or angular velocity measured by the position/attitude measuring part 60 is given to the ship position estimating part 55.

The estimation trigger specifying part 41 accepts a specification of the estimation time by operation etc. of the user. The estimation trigger specifying part 41 outputs the estimation time to the ship position estimating part 55.

The ship position estimating part 55 estimates the ship position at the estimation time by using a difference or an interval between the present time and the estimation time, the speed, acceleration, or angular velocity at the measured present time. The ship position estimating part 55 outputs the position of the ship 100 at the present time (present position), the position of the ship 100 at the estimation time (estimated position), and the relative position between the present position and the target point (arrival-at-a-shore origin 91) to the relative position estimating part 56.

The relative position estimating part 56 calculates the relative position between the present position and the estimated position. The relative position estimating part 56 calculates (estimates) the relative position between the estimated position and the target point (arrival-at-a-shore origin 91) by using the relative position between the present position and the estimated position, and the relative position between the present position and the target point (arrival-at-a-shore origin 91).

By such a configuration, the relative position measuring device 10D can estimate the relative position of the target point (arrival-at-a-shore origin 91) at the estimated position. Here, the relative position measuring device 10D can use the relative position between the present position and the target point (arrival-at-a-shore origin 91) as described above, and by further using the positioning signals of the GNSS, it can highly accurately calculate the relative position between the present position and the estimated position. Therefore, the relative position measuring device 10D can highly accurately estimate the relative position of the target point (arrival-at-a-shore origin 91) at the estimated position.

Note that the method of specifying the estimation time is not limited to the above configuration, but the following specifying methods may also be used.
(A) The estimation time may be specified by the time difference (interval) from the present time. In this case, the estimation trigger specifying part 41 calculates a estimation time by adding or subtracting the specified time interval to/from the present time. Here, the estimation time is not limited to a single timing, but may be a plurality of timings which are set by using time intervals. The specification of the time interval may be performed automatically or may be performed manually. The time intervals may be or may not be an equal interval.
(B) The estimation time may be specified by an interval of a moving distance. In this case, for example, the estimation trigger specifying part 41 acquires the speed and the acceleration of the ship from the functional part which can obtain the speed and the acceleration of the ship as described above. Then, the estimation trigger specifying part 41 calculates the estimation time by dividing the specified moving distance by the speed.
   Note that, when using the moving distance interval, the estimation trigger specifying part 41 may output the moving distance to the ship position estimating part 55. The ship position estimating part 55 estimates the ship position based on the acquired moving distance. In this case, the moving distance can be treated as an "estimation time" of the present disclosure. The specification of the moving distance interval may be performed automatically, or may be performed manually. The moving distance interval may be or may not be the equal interval.
(C) The estimation time may be specified by the distance from the ship position to the arrival-at-a-shore origin. In this case, for example, the estimation trigger specifying part 41 calculates the distance between the ship position and the arrival-at-a-shore origin at the present time or each timing. The estimation trigger specifying part 41 sets the number of estimation timings according to the distance.
   In detail, for example, the number of estimation timings may be fixed, regardless of the distance. In this case, the estimation time is set at a shorter interval as the distance decreases, and the estimation time is set at a longer interval as the distance increases. Therefore, the relative position between the ship and the arrival-at-a-shore origin can be estimated at a shorter interval as the ship (ship 100) approaches the arrival-at-a-shore origin 91. Note that, without fixing the number of estimation timings per distance, the number of estimation timings per distance may be further increased as the distance becomes shorter.
   Alternatively, for example, while fixing the time interval of the estimation timing, it may be possible to set the number of estimation timings as variable according to the distance.
(D) The estimation time is specified using ship's movement information of the past. In this case, for example, the estimation trigger specifying part 41 acquires or stores the past movement information of the ship (a travel trail of the ship). Then, the estimation trigger specifying part 41 specifies the estimation time by specifying a given position on the travel trail of the ship. Alternatively, the estimation trigger specifying part 41 calculates a future estimated route based on the travel trail of the ship. Then, the estimation trigger specifying part 41 specifies the estimation time by specifying a given position on the estimated route. These specifications of the given position may be performed automatically based on the time interval or the moving distance interval or may be performed manually. Further, in this case, since the ship position is obtained, the estimation trigger specifying part 41 can also output the specified ship position to the ship position estimating part 55.

### (Relative Position Measuring Method)

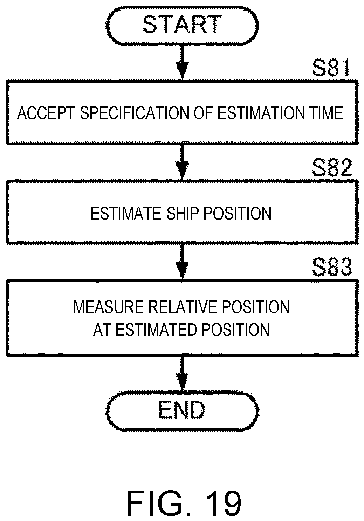

Each processing in the above description can be achieved by executing the following flowchart of the relative position measuring method. Fig. 19 is a flowchart illustrating the relative position measuring method according to the seventh embodiment. Note that, below, description of the concrete contents of each processing, which have already been described above and which are easily understood from the contents described above, is omitted.

The calculating part 50D of the relative position measuring device 10D accepts the specification of the estimation time by using the estimation trigger specifying part 41 (S81). The calculating part 50D estimates the ship position at the estimation time based on the estimation time, the present time, and the present ship position (S82).

The calculating part 50D calculates (measures) the relative position between the estimated position and the target point, by using the relative position between the present position and the target point and the relative position between the present position and the estimated position (S83). For example, the calculating part 50D calculates the parallel distance Lp2 (=Lp-Lp1) at the estimated position by subtracting the parallel distance Lp1 between the present position and the estimated position from the parallel distance Lp at the present position. Further, the calculating part 50D calculates the perpendicular distance Lv2 (=Lv-Lpv) at the estimated position by subtracting the perpendicular distance Lv1 between the present position and the estimated position from the perpendicular distance Lv at the present position.

Note that in the above description the target point is specified by specifying the position of the image data imaged by the monocular camera 20. However, the target point may be specified using a bird's-eye view. In this case, the relative position measuring device displays the bird's-eye view on a display screen. Further, the relative position measuring device stores beforehand a relation between positional coordinates of each point in the bird's-eye view, and positional coordinates of each point of the image data.

By using the bird's-eye view, the target quay etc. can be confirmed while being looked down from the sky, and therefore, the target point can easily be grasped for the specification. Further, since it is easy to notice a deviation in the far-and-near distance or the quay line, a horizontal quay line can easily be set.

Note that, when the image data imaged by the monocular camera 20 is used, the target point can be specified in an image almost the same as what the user is looking at, and therefore, the target point can be specified in the intuitively intelligible manner. Further, it is easy to visually recognize a small stationary object, such as a N-flag, and therefore, the object is easily and correctly specified as the target point.

The configurations illustrated in the respective embodiments etc. described above can be suitably combined, and operation and effects can be obtained depending on the combination.

### DESCRIPTION OF REFERENCE CHARACTERS

- 10, 10A, 10B, 10C, 10D:: Relative Position Measuring Device
- 20:: Monocular Camera
- 30:: Ranging Part
- 40:: Target Point Specifying Part
- 41:: Estimation Trigger Specifying Part
- 50, 50A, 50B, 50C, 50D:: Calculating Part
- 51, 51B, 51C:: Quay Line Determining Part
- 52, 52A, 52B, 52C:: Arrival-at-a-shore Origin Determining Part
- 53, 53B, 53C:: Relative Position Calculating Part
- 54B, 54C:: Conversion Matrix Calculating Part
- 55:: Ship Position Estimating Part
- 56:: Relative Position Estimating Part
- 60:: Position/attitude Measuring Part
- 90:: Quay
- 91:: Arrival-at-a-shore Origin
- 99:: Sea
- 100:: Ship
- 101:: Bridge
- 102, 102B:: Sensor
- 110:: Starboard End
- 120:: Bow
- 600:: Positioning Signal Receiving Part
- 900:: Quay Surface
- 910:: Quay Line
- 911:: Start Point
- 912:: End Point

### TERMINOLOGY

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes one or more computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the embodiment, certain acts, events, or functions of any of the algorithms described herein can be performed in a different sequence, can be added, merged, or left out altogether (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. In addition, different tasks or processes can be performed by different machines and/or computing systems that can function together.

The various illustrative logical blocks and modules described in connection with the embodiments disclosed herein can be implemented or performed by a machine, such as a processor. A processor can be a microprocessor, but in the alternative, the processor can be a controller, microcontroller, or state machine, combinations of the same, or the like. A processor can include electrical circuitry configured to process computer-executable instructions. In another embodiment, a processor includes an application specific integrated circuit (ASIC), a field programmable gate array (FPGA) or other programmable device that performs logic operations without processing computer-executable instructions. A processor can also be implemented as a combination of computing devices, e.g., a combination of a digital signal processor (DSP) and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Conditional language such as, among others, "can," "could," "might" or "may," unless specifically stated otherwise, are otherwise understood within the context as used in general to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Any process descriptions, elements or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C. The same holds true for the use of definite articles used to introduce embodiment recitations. In addition, even if a specific number of an introduced embodiment recitation is explicitly recited, those skilled in the art will recognize that such recitation should typically be interpreted to mean at least the recited number (e.g., the bare recitation of "two recitations," without other modifiers, typically means at least two recitations, or two or more recitations).

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.).

For expository purposes, the term "horizontal" as used herein is defined as a plane parallel to the plane or surface of the floor of the area in which the system being described is used or the method being described is performed, regardless of its orientation. The term "floor" can be interchanged with the term "ground" or "water surface." The term "vertical" refers to a direction perpendicular to the horizontal as just defined. Terms such as "above," "below," "bottom," "top," "side," "higher," "lower," "upper," "over," and "under," are defined with respect to the horizontal plane.

As used herein, the terms "attached," "connected," "mated," and other such relational terms should be construed, unless otherwise noted, to include removable, moveable, fixed, adjustable, and/or releasable connections or attachments. The connections/attachments can include direct connections and/or connections having intermediate structure between the two components discussed.

Numbers preceded by a term such as "approximately," "about," and "substantially" as used herein include the recited numbers, and also represent an amount close to the stated amount that still performs a desired function or achieves a desired result. For example, the terms "approximately," "about," and "substantially" may refer to an amount that is within less than 10% of the stated amount. Features of embodiments disclosed herein preceded by a term such as "approximately," "about," and "substantially" as used herein represent the feature with some variability that still performs a desired function or achieves a desired result for that feature.

It should be emphasized that many variations and modifications may be made to the above-described embodiments, the elements of which are to be understood as being among other acceptable examples. All such modifications and variations are intended to be included herein within the scope of this disclosure and protected by the following claims.

## Claims

1. A relative position measuring device, comprising:
a sensor having a monocular camera configured to capture an image, and a ranging part configured to measure a three-dimensional relative position of a measuring point on the basis of a sensor position; and
a calculating part configured to determine a three-dimensional relative position of a target point specified in the image on the basis of the sensor position based on the three-dimensional relative position of the measuring point.

2. The relative position measuring device of claim 1, wherein the ranging part measures a measuring point distance from the sensor position to the measuring point, a measuring point azimuth angle on the basis of the sensor position, and a measuring point elevation angle on the basis of the sensor position,
wherein the calculating part is adapted to:
based on the image, calculate a target point azimuth angle on the basis of the sensor position, and a target point elevation angle on the basis of the sensor position; and
calculate a target point distance from the sensor position to the target point based on the target point azimuth angle and the target point elevation angle, and the measuring point azimuth angle and the measuring point elevation angle, to determine the three-dimensional relative position of the target point.

3. The relative position measuring device of claim 2, wherein the calculating part is adapted to:
extract a candidate point from a plurality of measuring points detected by the ranging part, based on at least one of conditions including the measuring point distance, a difference between the target point azimuth angle and the measuring point azimuth angle, and a difference between the target point elevation angle and the measuring point elevation angle; and
based on the candidate point, determine the measuring point corresponding of the target point.

4. The relative position measuring device of any one of claims 1 to 3, wherein the target point is an arrival-at-a-shore origin of a ship carrying the relative position measuring device.

5. The relative position measuring device of claim 4, wherein the calculating part includes:
an arrival-at-a-shore origin determining part configured to determine a three-dimensional relative position of the arrival-at-a-shore origin on the basis of the sensor position;
a quay line determining part configured to determine a three-dimensional relative position of a quay line passing through the arrival-at-a-shore origin on the basis of the sensor position; and
a relative position calculating part configured to calculate a distance parallel to the quay line from a ship position to the arrival-at-a-shore origin, and a distance perpendicular to the quay line from the ship position to the arrival-at-a-shore origin, based on the arrival-at-a-shore origin and the quay line.

6. The relative position measuring device of claim 5, wherein the calculating part includes:
an estimation trigger specifying part configured to accept a specification of an estimation time;
a ship position estimating part configured to estimate the three-dimensional relative position of the ship at the estimation time on the basis of the sensor position; and
a relative position estimating part configured to calculate, based on the arrival-at-a-shore origin and the quay line, a distance parallel to the quay line from the three-dimensional relative position of the ship to the arrival-at-a-shore origin at the estimation time, and a distance perpendicular to the quay line from the three-dimensional relative position of the ship to the arrival-at-a-shore origin at the estimation time.

7. The relative position measuring device of claim 6, wherein the estimation trigger specifying part specifies the estimation time by using an time interval or a moving distance interval.

8. The relative position measuring device of claim 6, wherein the estimation trigger specifying part specifies the estimation time by a distance from the ship position to the arrival-at-a-shore origin.

9. The relative position measuring device of claim 6, wherein the estimation trigger specifying part specifies the estimation time by using past movement information of the ship.

10. The relative position measuring device of any one of claims 5 to 9, wherein the quay line determining part determines the quay line by using the arrival-at-a-shore origin.

11. The relative position measuring device of any one of claims 5 to 9, wherein the arrival-at-a-shore origin determining part determines the arrival-at-a-shore origin by using the quay line and the target point azimuth angle on the basis of the sensor position.

12. The relative position measuring device of any one of claims 1 to 11, comprising a position attitude measuring part configured to measure a position and an attitude of the sensor,
wherein the calculating part is adapted to:
calculate a coordinate conversion matrix for converting the three-dimensional relative position of the target point into a position of a world coordinate system by using the position and the attitude; and
calculate the three-dimensional relative position of the target point in the world coordinate system by using the coordinate conversion matrix.

13. The relative position measuring device of claim 12, wherein the calculating part sets the target point as the origin of the world coordinate system.

14. A relative position measuring method, comprising the steps of:
capturing an image;
measuring a three-dimensional relative position of a measuring point on the basis of a ranging position that is located at a known position with respect to the imaging position; and
based on the three-dimensional relative position of the measuring point, determining a three-dimensional relative position of a target point specified in the image on the basis of the ranging position.

15. The relative position measuring method of claim 14, comprising the steps of:
measuring a measuring point distance from the ranging position to the measuring point, a measuring point azimuth angle on the basis of the ranging position, and a measuring point elevation angle on the basis of the ranging position;
from the image, calculating a target point azimuth angle on the basis of the ranging position, and a target point elevation angle on the basis of the ranging position; and
calculating a target point distance from the ranging position to the target point based on the target point azimuth angle and the target point elevation angle, and the measuring point azimuth angle and the measuring point elevation angle, to determine the three-dimensional relative position of the target point.

16. The relative position measuring method of claim 14 or 15, wherein the target point is an arrival-at-a-shore origin of the ship that performs the relative position measurement.

17. The relative position measuring method of claim 16, comprising the steps of:
determining a three-dimensional relative position of the arrival-at-a-shore origin on the basis of the ranging position;
determining a three-dimensional relative position of a quay line passing through the arrival-at-a-shore origin on the basis of the ranging position; and
calculating, based on the arrival-at-a-shore origin and the quay line, a distance parallel to the quay line from the ship position to the arrival-at-a-shore origin, and a distance perpendicular to the quay line from the ship position to the arrival-at-a-shore origin.

18. The relative position measuring method of claim 17, comprising the steps of:
accepting a specification of an estimation time;
estimating a three-dimensional relative position of the ship at the estimation time on the basis of the ranging position; and
calculating, based on the arrival-at-a-shore origin and the quay line, a distance parallel to the quay line from the three-dimensional relative position of the ship to the arrival-at-a-shore origin at the estimation time, and a distance perpendicular to the quay line from the three-dimensional relative position of the ship to the arrival-at-a-shore origin at the estimation time.

19. A relative position measurement program configured to cause a processing unit to execute processing, the processing comprising:
capturing an image;
measuring a three-dimensional relative position of a measuring point on the basis of a ranging position that is located at a known position with respect to the imaging position; and
based on the three-dimensional relative position of the measuring point, determining a three-dimensional relative position of a target point specified in the image on the basis of the ranging position.

20. The relative position measurement program of claim 19, the processing comprising:
measuring a measuring point distance from the ranging position to the measuring point, a measuring point azimuth angle on the basis of the ranging position, and a measuring point elevation angle on the basis of the ranging position;
based on the image, calculating a target point azimuth angle on the basis of the ranging position, and a target point elevation angle on the basis of the ranging position; and
calculating a target point distance from the ranging position to the target point based on the target point azimuth angle and the target point elevation angle, and the measuring point azimuth angle and the measuring point elevation angle, to determine the three-dimensional relative position of the target point.

21. The relative position measurement program of claim 19 or 20, the processing comprising specifying the target point as an arrival-at-a-shore origin of the ship that performs the relative position measurement.

22. The relative position measurement program of claim 21, the processing comprising:
determining a three-dimensional relative position of the arrival-at-a-shore origin on the basis of the ranging position;
determining a three-dimensional relative position of a quay line passing through the arrival-at-a-shore origin on the basis of the ranging position; and
calculating, based on the arrival-at-a-shore origin and the quay line, a distance parallel to the quay line from the ship position to the arrival-at-a-shore origin, and a distance perpendicular to the quay line from the ship position to the arrival-at-a-shore origin.

23. The relative position measurement program of claim 22, the processing comprising:
accepting a specification of an estimation time;
estimating a three-dimensional relative position of the ship at the estimation time on the basis of the ranging position; and
calculating, based on the arrival-at-a-shore origin and the quay line, a distance parallel to the quay line from the three-dimensional relative position of the ship to the arrival-at-a-shore origin at the estimation time, and a distance perpendicular to the quay line from the three-dimensional relative position of the ship to the arrival-at-a-shore origin at the estimation time.
